(19) Europäisches Patentamt
European Patent Office
Office européen des brevets

(11) **EP 4 281 895 B1**

(12) **EUROPEAN PATENT SPECIFICATION**

(45) Date of publication and mention
of the grant of the patent:
**21.05.2025 Bulletin 2025/21**

(21) Application number: **21920190.2**

(22) Date of filing: **19.01.2021**

(51) International Patent Classification (IPC):
**G06Q 10/20** (2023.01)   **G06F 30/20** (2020.01)
**G06Q 10/04** (2023.01)   **G06Q 50/06** (2024.01)
**G06F 30/27** (2020.01)   **G06F 119/08** (2020.01)
**G06F 113/04** (2020.01)   **G06F 119/06** (2020.01)

(52) Cooperative Patent Classification (CPC):
**G06F 30/27; G06Q 10/04; G06Q 10/20;
G06Q 50/06;** G06F 2113/04; G06F 2119/06;
G06F 2119/08

(86) International application number:
**PCT/CN2021/072682**

(87) International publication number:
**WO 2022/155785 (28.07.2022 Gazette 2022/30)**

(54) **METHOD AND APPARATUS FOR TRAINING MODEL FOR PREDICTING TEMPERATURE RISE OF HEATING ELEMENT IN SWITCHGEAR**

VERFAHREN UND VORRICHTUNG ZUM TRAINIEREN EINES MODELLS ZUR VORHERSAGE DES TEMPERATURANSTIEGS EINES HEIZELEMENTS IN EINER SCHALTANLAGE

PROCÉDÉ ET APPAREIL POUR FORMER UN MODÈLE PERMETTANT DE PRÉDIRE L'ÉCHAUFFEMENT D'UN ÉLÉMENT CHAUFFANT DANS UN APPAREIL DE COMMUTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **ABB SCHWEIZ AG**
**5400 Baden (CH)**

(72) Inventors:
• **ZENG, Lusha**
**Xiamen, Fujian 361005 (CN)**
• **GE, Xiushan**
**Beijing 100028 (CN)**
• **ZHENG, Wei**
**Xiamen, Fujian 361000 (CN)**

(74) Representative: **Zimmermann & Partner**
**Patentanwälte mbB**
**Postfach 330 920**
**80069 München (DE)**

(56) References cited:
CN-A- 109 284 863   CN-A- 109 284 863
CN-A- 110 175 386   CN-A- 110 175 386
CN-A- 110 659 755   CN-A- 110 659 755
CN-A- 110 991 011   CN-A- 110 991 011
US-A1- 2020 184 329   US-A1- 2020 184 329

• LI JIANGTAO ET AL: "A Novel Contact Temperature Calculation Algorithm in Distribution Switchgears for Condition Assessment", IEEE TRANSACTIONS ON COMPONENTS, PACKAGING AND MANUFACTURING TECHNOLOGY, IEEE, USA, vol. 9, no. 2, 2 February 2019 (2019-02-02), pages 279 - 287, XP011707635, ISSN: 2156-3950, [retrieved on 20190131], DOI: 10.1109/ TCPMT.2018.2886404

**Description**

**FIELD**

Example embodiments of the present disclosure generally relate to the field of switchgears, and more specifically, to a method and an apparatus for training a model for predicting a temperature rise of a heating element in a switchgear, a method and an apparatus for determining a temperature rise of a heating element in a switchgear, a computer readable storage medium, and a computer program product.

**BACKGROUND**

A switchgear is an electrical device in a power system that can achieve on/off, control or protection function during the process of power generation, transmission, distribution, and power conversion. As the use time of the switchgear increases, the conductive connection (such as contacts) in a main circuit of the switchgear may increase its resistance due to mechanical vibration, wear and manufacturing process defects, thereby causing the temperature of the contacts to rise or even burning the contacts. It may cause a safety incident. Moreover, inadequate switchgear on-site installation and component damages are also the main factors that contribute to an anomaly temperature rise in the switchgear.

A conventional way of detecting such an anomaly temperature rise is to use a portable infrared device to detect the temperature of the contacts in the switchgear via a viewing window. Then, the detected temperature is compared with a temperature limit value of the contacts under a rating current to judge whether there is the anomaly temperature rise in the contacts of the switchgear. However, such a detecting method is not always accurate and is inefficient. Recently, an online temperature monitoring system is applied in the switchgear. However, such an online temperature monitoring system mainly focuses on temperature collecting without effective anomaly temperature rise detection.

Thus, there is a need for an improved solution for temperature rise monitoring of the switchgear.

Li Jiangtao et al. describe in a scientific publication (DOI: 10.1109/TCPMT.2018.2886404) a contact temperature calculation algorithm in distribution switchgears for condition assessment. CN 110 991 011 A describes a real-time hot spot temperature prediction method for transformers. CN 110 659 755 A describes modeling methods for predicting a motor temperature. CN 110 175 386 A describes temperature prediction methods for electrical equipment in a substation. CN 109 284 863 A describes a method for predicting temperature of power equipment based on deep neural network. US 2020/184329 A1 describes a method for improving predictive models used for controlling a temperature in an area.

**SUMMARY**

The invention is defined in the appended claims. In view of the foregoing problems, example embodiments of the present disclosure propose a real time regression model for predicting temperature rise of a heating element in the switchgear and a method for detecting anomaly temperature rise of the switchgear. Embodiments of the present disclosure are adaptive to different operating conditions and setups of the switchgear. Embodiments of the present disclosure can reduce the outage time of the switchgear and improve the reliability of the switchgear.

In a first aspect, example embodiments of the present disclosure provide a method for training a model for predicting a temperature rise of a heating element in a switchgear, comprising: obtaining a model for predicting the temperature rise, the model comprising a plurality of inputs, an output, and several parameters to be determined; obtaining n+1 sets of physical quantities in relation to the heating element, each set of physical quantities being collected at a corresponding one of n+1 time points spaced apart from each other by a time step in a normal operation state of the heating element, each set of physical quantities comprising a current and an actual temperature of the heating element and an ambient temperature; converting the actual temperature in each set of physical quantities into an actual temperature rise based on the corresponding ambient temperature; and training the model with the current, the actual temperature rise and the ambient temperature to determine the several parameters.

The proposed model is a modified transient heat balance equation with undetermined thermal and energy parameters. Time constant as a function of temperature rise and dynamic current loads are both taken into consideration when building the model. The model trained by the method according to the first aspect may be used to predict transient or steady state temperature rise under any current load. This model is designed with strong physical constraints and few parameters which could prevent over fitting on most switchgear workloads. With these embodiments, the outage time of the switchgear can be reduced and the reliability of the switchgear can be improved.

In some embodiments, training the model with the current, the actual temperature rise and the ambient temperature comprises: for each time step, creating an equation by using the current, the actual temperature rise and the ambient temperature corresponding to a starting time point of the time step as the inputs of the model and using the actual temperature rise corresponding to an ending time point of the time step as the output of the model, to obtain n equations; and solving the n equations to determine the several parameters. With these embodiments, through plugging the n+1 sets of physical quantities into the model, the n equations can be obtained and solved to determine the several parameters.

In some embodiments, each of the n equations is created by using a discrete approximate scheme or Runge-Kutta iterative method. With these embodiments, the n equations can be obtained reliably with the discrete approximate scheme or Runge-Kutta iterative method.

In some embodiments, the n equations are solved by a least square method. With these embodiments, the n equations can be solved by the least square method to determine the several parameters.

In some embodiments, the heating element comprises at least one of a busbar contact, a circuit breaker upper contact finger, a circuit breaker lower contact finger, and a cable contact. With these embodiments, the temperature rise of these contacts may be predicted reliably with the trained model.

In a second aspect, example embodiments of the present disclosure provide a method for determining a temperature rise of a heating element in a switchgear, comprising: predicting the temperature rise of the heating element in the switchgear with a model trained by using the method according to the first aspect. With these embodiments, the temperature rise of the heating element in the switchgear may be predicted reliably with the trained model.

In some embodiments, predicting the temperature rise of the heating element with the model comprises: obtaining a real-time current of the heating element and an ambient temperature collected in a first time step; and predicting the temperature rise of the heating element in the first time step through inputting the real-time current, the ambient temperature, and the predicted temperature rise in a second time step prior to the first time step into the model. With these embodiments, the temperature rise in the present time step can be predicted reliably by using the current, the ambient temperature, and the predicted temperature rise in the previous time step.

In some embodiments, the method further comprises: obtaining a real-time temperature of the heating element collected in the first time step; converting the real-time temperature of the heating element into a real-time temperature rise based on the ambient temperature; and triggering an alarm in response to a difference between the real-time temperature rise and the predicted temperature rise exceeding a predetermined threshold. With these embodiments, the anomaly temperature rise in the switchgear can be detected timely and thus corresponding maintenance may be performed on the switchgear.

In some embodiments, predicting the temperature rise of the heating element comprises predicting at least one of a transient temperature rise or a steady state temperature rise of the heating element. With these embodiments, the transient or steady state temperature rise of the heating element may be predicted under any current load.

In a third aspect, example embodiments of the present disclosure provide an apparatus for training a model for predicting a temperature rise of a heating element in a switchgear, comprising: at least one processor; and at least one memory comprising instructions stored thereon which, when executed by the at least one processor, cause the at least one processor to perform acts comprising: obtaining a model for predicting the temperature rise, the model comprising a plurality of inputs, an output, and several parameters to be determined; obtaining n+1 sets of physical quantities in relation to the heating element, each set of physical quantities being collected at a corresponding one of n+1 time points spaced apart from each other by a time step in a normal operation state of the heating element, each set of physical quantities comprising a current and an actual temperature of the heating element and an ambient temperature; converting the actual temperature in each set of physical quantities into an actual temperature rise based on the corresponding ambient temperature; and training the model with the current, the actual temperature rise and the ambient temperature to determine the several parameters.

In some embodiments, training the model with the current, the actual temperature rise and the ambient temperature comprises: for each time step, creating an equation by using the current, the actual temperature rise and the ambient temperature corresponding to a starting time point of the time step as the inputs of the model and using the actual temperature rise corresponding to an ending time point of the time step as the output of the model, to obtain n equations; and solving the n equations to determine the several parameters.

In some embodiments, each of the n equations is created by using a discrete approximate scheme or Runge-Kutta iterative method.

In some embodiments, the n equations are solved by a least square method.

In some embodiments, the heating element comprises at least one of a busbar contact, a circuit breaker upper contact finger, a circuit breaker lower contact finger, and a cable contact.

In a fourth aspect, example embodiments of the present disclosure provide an apparatus for determining a temperature rise of a heating element in a switchgear, comprising: at least one processor; and at least one memory comprising instructions stored thereon which, when executed by the at least one processor, cause the at least one processor to perform acts comprising: predicting the temperature rise of the heating element in the switchgear with a model trained by using the apparatus according to the third aspect.

In some embodiments, predicting the temperature rise of the heating element with the model comprises: obtaining a real-time current of the heating element and an ambient temperature collected in a first time step; and predicting the temperature rise of the heating element in the first time step through inputting the real-time current, the ambient temperature, and the predicted temperature rise in a second time step prior to the first time step into the model.

In some embodiments, the acts further comprises: obtaining a real-time temperature of the heating element collected in the first time step; converting the real-time temperature of the heating element into a real-time temperature rise based on the ambient temperature; and triggering an alarm in response to a difference between the real-time temperature rise and the predicted temperature rise exceeding a predetermined threshold.

In some embodiments, predicting the temperature rise of the heating element comprises predicting at least one of a transient temperature rise or a steady state temperature rise of the heating element.

In some embodiments, the at least one processor comprises at least one of a local processor or a remote processor.

In some embodiments, wherein the remote processor comprises a cloud computing node.

In a fifth aspect, example embodiments of the present disclosure provide a computer readable storage medium having instructions stored thereon, the instructions, when executed by at least one processor, cause the at least one processor to perform the method according to the first and second aspect.

In a sixth aspect, example embodiments of the present disclosure provide a computer program product comprising instructions when executed by at least one processor, causing the at least one processor to perform the method according to the first and second aspect.

## DESCRIPTION OF DRAWINGS

Drawings described herein are provided to further explain the present disclosure and constitute a part of the present disclosure. The example embodiments of the disclosure and the explanation thereof are used to explain the present disclosure, rather than to limit the present disclosure improperly.

Fig. 1 illustrates a schematic view of a switchgear in accordance with an embodiment of the present disclosure;

Fig. 2 illustrates a flowchart of a method for training a model for predicting a temperature rise of a heating element in a switchgear in accordance with an embodiment of the present disclosure;

Fig. 3 illustrates a flowchart of training the model with the current, the actual temperature rise and the ambient temperature in accordance with an embodiment of the present disclosure;

Fig. 4 illustrates a flowchart of a method for determining a temperature rise of a heating element in a switchgear in accordance with an embodiment of the present disclosure;

Fig. 5 illustrates a flowchart of predicting the temperature rise of the heating element with the model in accordance with an embodiment of the present disclosure;

Fig. 6 illustrates an example test arrangement of the switchgear in accordance with an embodiment of the present disclosure;

Figs. 7-8 illustrate prediction results of the temperature rise of the heating element in the example test arrangement of Fig. 6; and

Fig. 9 illustrates a schematic diagram of an apparatus for training the model for predicting the temperature rise and/or determining the temperature rise in accordance with embodiments of the present disclosure.

Throughout the drawings, the same or similar reference symbols are used to indicate the same or similar elements.

## DETAILED DESCRIPTION OF EMBODIMENTS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

As discussed above, the conventional way of detecting the anomaly temperature rise is not always accurate and is inefficient, and the conventional online temperature monitoring system mainly focuses on temperature collecting without effective anomaly temperature rise detection. According to embodiments of the present disclosure, a real time regression model for predicting temperature rise of a heating element in the switchgear and a method for detecting anomaly temperature rise of the switchgear are proposed; and the time regression model and the anomaly temperature rise detecting method are adaptive to different operating conditions and setups of the switchgear. The above idea may be implemented in various manners, as will be described in detail in the following paragraphs.

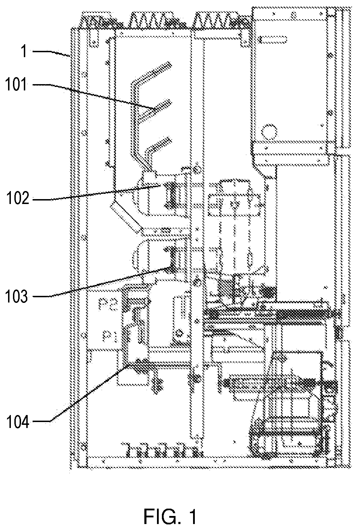

Hereinafter, the principles of the present disclosure will be described in detail with reference to Figs. 1-9.

Referring to Fig. 1 first, Fig. 1 illustrates a schematic view of a switchgear 100 in accordance with an embodiment of the present disclosure. As shown in Fig. 1, the switchgear 100 generally includes a busbar contact 101, a circuit breaker upper contact finger 102, a circuit breaker lower contact finger 103, and a cable contact 104. During operation of the switchgear 100, the temperature of the busbar contact 101, the circuit breaker upper contact finger 102, the circuit breaker lower contact finger 103, and the cable contact 104 may rise, which may adversely affect normal functions of the switchgear 100. In the context of the present disclosure, each of the busbar contact 101, the circuit breaker upper contact finger 102, the circuit breaker lower contact finger 103, and the cable contact 104 may be referred to as a heating element of the switchgear 100. It is to be understood that the present disclosure focuses on the temperature rise prediction of the heating element, and thus detailed introductions of other structures or operations of the switchgear 100 are omitted.

In order to predict the temperature rise of the heating element in the switchgear 100, embodiments of the present disclosure propose a model hypothesis. Since a part of the heat generated by the heating element during operation of the switchgear 100 is dissipated and the other part of the generated heat is absorbed by the heating element, it is supposed that a heat balance equation is satisfied for the heating element in the switchgear 100 during the time period $dt$, represented by an equation (1):

$$pdt = K_T A\tau dt + cmd\tau \qquad (1),$$

$pdt$ represents the total heat generated by the heating element in the switchgear during $dt$;

$K_T A\tau dt$ represents the heat dissipated by the heating element during $dt$;

$cmd\tau$ represents the heat absorbed by the heating element when the temperature of the heating element is raised by $d\tau$ during $dt$;

p represents the total heating power of the heating element;

$K_T$ represents a heat dissipating coefficient of the heating element;

A represents an effective heat dissipating area of the heating element;

$\tau$ represents a temperature rise of the heating element;

c represents the specific heat of the heating element;

m represents the mass of the heating element.

In engineering, the forms of the heat dissipation include heat conduction, heat convection and heat radiation. For the sake of simplicity, the above three forms of the heat dissipation are combined, that is, $K_T A\tau$ is used to represent the overall heat dissipation process. The selection of $K_T$ and $A$ typically depends on the specific application scenarios. $K_T$ is simplified on the basis of the $K_T$ expression obtained by a similarity theory, thereby obtaining an equation (2):

$$K_T = \lambda\tau^\gamma \qquad (2),$$

$\lambda$ and $\gamma$ are undetermined parameters.

In order to solve the equation (1), two example approaches are provided in the present disclosure.

**Approach I**

It is assumed that an integral calculation of the equation (1) is performed in a short time period from $t_0$ to $t_1$, with an initial condition of $\tau = \tau_0$ when $t = t_0$. Since the time period from $t_0$ to $t_1$ is short, the temperature rise of the heating element is small. Thus, the heat dissipating coefficient $K_T$ may be regarded as a constant during this period and calculated by an equation (3):

$$K_T = \lambda \tau_o{}^\gamma \qquad (3),$$

$\tau_0$ represents the temperature rise of the heating element at $t_0$.

Then, an equation (4) is obtained by integration of the equation (1) with the initial condition of $\tau = \tau_0$ when $t = t_0$:

$$\tau = \frac{p}{K_T A}\left(1 - e^{-\frac{t}{\frac{cm}{K_T A}}}\right) + \tau_0 e^{-\frac{t}{\frac{cm}{K_T A}}} \qquad (4).$$

A time constant $T$ is defined by $T = \dfrac{cm}{K_T A}$. Since the parameters $c, m, A$ are undetermined, it is assumed that the time constant T is represented by an equation (5):

$$T = \alpha * \frac{1}{K_T} + \beta \qquad (5),$$

$\alpha, \beta$ are undetermined parameters.

The total heating power $p$ of the heating element is related to the current, electrical resistance and other loss of the heating element. Thus, in some embodiments, it is assumed that total heating power $p$ is represented by an equation (6):

$$p = \eta * I^2 * [1 + 0.00381 * (\tau + T_{amb})] * \rho_0 \qquad (6),$$

$\eta$ is an undetermined parameter which may be associated to the skin effect or other factors of the heating element;
$I$ represents the current in the heating element;
$T_{amb}$ represents the ambient temperature;
$\rho_0$ represents the resistivity of the heating element at 0 °C.

It is to be understood that in other embodiments, the total heating power $p$ of the heating element may be represented by other equations. The scope of the present disclosure is not intended to be limited in this respect.

Then, through plugging the equations (3), (5), and (6) into the equation (4), an equation (7) is obtained:

$$\tau = \frac{\eta * I^2 * [1 + 0.00381 * (\tau_0 + T_{amb})] * \rho_0}{\lambda \tau_0{}^\gamma A}\left(1 - e^{-\frac{t}{\alpha*\frac{1}{\lambda \tau_0{}^\gamma} + \beta}}\right) + \tau_0 e^{-\frac{t}{\alpha*\frac{1}{\lambda \tau_0{}^\gamma} + \beta}} \qquad (7).$$

The equation (7) may be rewritten as an equation (8) through letting $d = \dfrac{\eta * \rho_0}{\lambda A}$, $a = \dfrac{\alpha}{\lambda}$, and $b = \beta$:

$$\tau = d * \frac{I^2 * [1 + 0.00381 * (\tau_0 + T_{amb})]}{\tau_0{}^\gamma}\left(1 - e^{-\frac{t}{a*\frac{1}{\tau_0{}^\gamma} + b}}\right) + \tau_0 e^{-\frac{t}{a*\frac{1}{\tau_0{}^\gamma} + b}} \qquad (8),$$

a, b, $\gamma$, and d are undetermined parameters.

The equation (8) is the result of the integral calculation of the equation (1) in the time period from $t_0$ to $t_1$ with the initial condition of $\tau = \tau_0$ when $t = t_0$.

In some embodiments, the constraints of the equation (8) may be set as $a \in (0,1000)$ ,$b \in$ [-1000,1000], $\gamma \in$ [0,0.45], $d \in$ [0,1] . The constraints are approximate parameter ranges derived from multiple times of experiments. In other embodiments, the constraints of the equation (8) may be set to be other ranges. The scope of the present disclosure is not intended to be limited in this respect.

The equation (8) may be rewritten into a more general form, represented by equation (9):

$$\tau_n = d * \frac{I_{n-1}{}^2 * [1 + 0.00381 * (\tau_{n-1} + T_{ambn-1})]}{\tau_{n-1}{}^\gamma} \left( 1 - e^{-\frac{\Delta t}{a * \frac{1}{\tau_{n-1}{}^\gamma} + b}} \right) + \tau_{n-1} e^{-\frac{\Delta t}{a * \frac{1}{\tau_{n-1}{}^\gamma} + b}} \quad (9),$$

$\tau_n$ represents the temperature rise of the heating element at $t_n$;

$\tau_{n-1}$ represents the temperature rise of the heating element at $t_{n-1}$;

$I_{n-1}$ represents the current in the heating element at $t_{n-1}$;

$T_{ambn-1}$ represents the ambient temperature at $t_{n-1}$;

$\Delta t = t_n - t_{n-1}$ represents an time interval between $t_n$ and $t_{n-1}$.

The constraints of the equation (9) may be the same as those of the equation (8), i.e., $a \in (0,1000)$ ,$b \in$ [-1000,1000], $\gamma \in$ [0,0.45], $d \in$ [0,1].

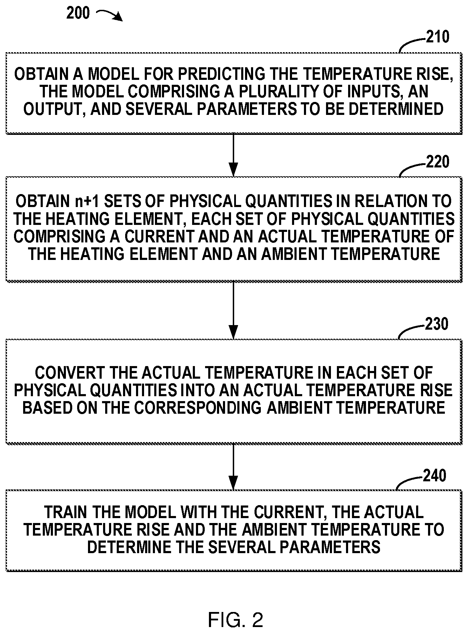

Since the parameters a, b, $\gamma$, and d are undetermined parameters, the above model needs to be trained in advance to determine these parameters. Fig. 2 illustrates a flowchart of a method 200 for training a model for predicting a temperature rise of a heating element in a switchgear in accordance with an embodiment of the present disclosure.

As shown in Fig. 2, the method 200 includes: at 210, obtaining the model for predicting the temperature rise. The model includes a plurality of inputs, an output, and several parameters to be determined. In an embodiment, the model is represented by the equation (9) as described above. In the equation (9), the output of the model includes the temperature rise $\tau_n$, the inputs of the model include the temperature rise $\tau_{n-1}$, the current $I_{n-1}$, and the ambient temperature $T_{ambn-1}$, and the several parameters to be determined include the parameters a, b, $\gamma$, and d.

In order to determine the parameters a, b, $\gamma$, and d, the model needs to be trained. To this end, the method 200 further includes: at 220, obtaining n+1 sets of physical quantities in relation to the heating element. Each set of physical quantities is collected at a corresponding one of n+1 time points $t_0, t_1, ..., t_n$ spaced apart from each other by a time step in a normal operation state of the heating element. Each set of physical quantities includes a current and an actual temperature of the heating element and an ambient temperature. Thus, the n+1 sets of physical quantities include the current $I_0, I_1, ..., I_n$, the actual temperature $T_{act0}, T_{act1}, ..., T_{actn}$ of the heating element, and the ambient temperature $T_{amb0}, T_{amb1}, ..., T_{ambn}$.

The method further includes: at 230, converting the actual temperature $T_{act0}, T_{act1}, ..., T_{actn}$ in each set of physical quantities into an actual temperature rise $T_{act0}, \tau_{act1}, ..., T_{actn}$ based on the corresponding ambient temperature $T_{amb0}, T_{amb1}, ..., T_{ambn}$. Specifically, the actual temperature rise $\tau_{act0} = T_{act0} - T_{amb0}$ , the actual temperature rise $\tau_{act1} = \tau_{act1} - T_{amb1}$ ,..., and the actual temperature rise $T_{actn} = \tau_{actn} - T_{ambn}$.

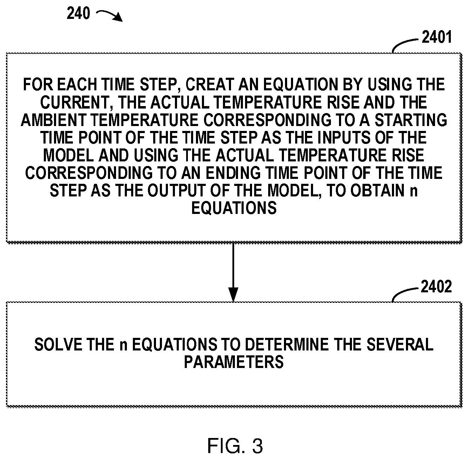

Then, at 240, the model may be trained with the current $I_0, I_1, ..., I_n$, the actual temperature rise $T_{act0}, \tau_{act1}, ..., \tau_{actn}$, and the ambient temperature $T_{amb0}, T_{amb1}, ..., T_{ambn}$, to determine the parameters a, b, $\gamma$, and d. Fig. 3 illustrates a flowchart of training the model with the current, the actual temperature rise and the ambient temperature in accordance with an embodiment of the present disclosure.

In some embodiments, as shown in Fig. 3, training the model with the current, the actual temperature rise and the ambient temperature comprises: at 2401, for each time step, creating an equation by using the current $I_0, I_1, ..., I_{n-1}$, the actual temperature rise $T_{act0}, \tau_{act1}, ..., \tau_{actn-1}$ and the ambient temperature $T_{amb0}, T_{amb1}, ..., T_{ambn-1}$ corresponding to a starting time point of the time step as the inputs of the model represented by the equation (9) and using the actual temperature rise $\tau_{act1}, ..., T_{actn}$ corresponding to an ending time point of the time step as the output of the model, to obtain n equations; and at 2402, solving the n equations by a least square method to determine the parameters a, b, $\gamma$, and d.

In some embodiments, at 2401, each of the n equations is created by using a discrete approximate scheme. In some embodiments, at 2402, the n equations are solved by a least square method.

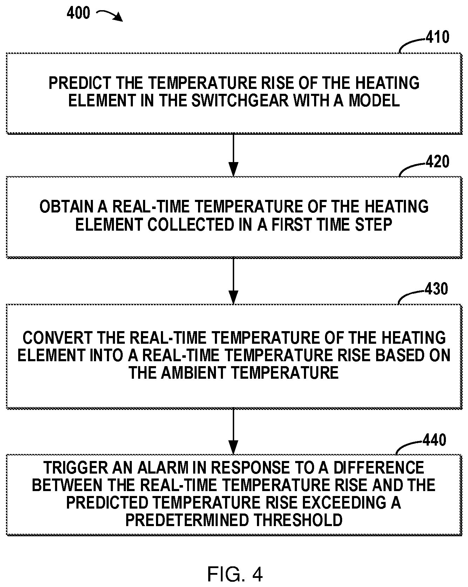

After the undetermined parameters a, b, $\gamma$, and d have been determined, the trained model represented by the equation (9) can be used to determine the temperature rise of the heating element step by step. Fig. 4 illustrates a flowchart of a method 400 for determining a temperature rise of a heating element in a switchgear in accordance with an embodiment of the present disclosure.

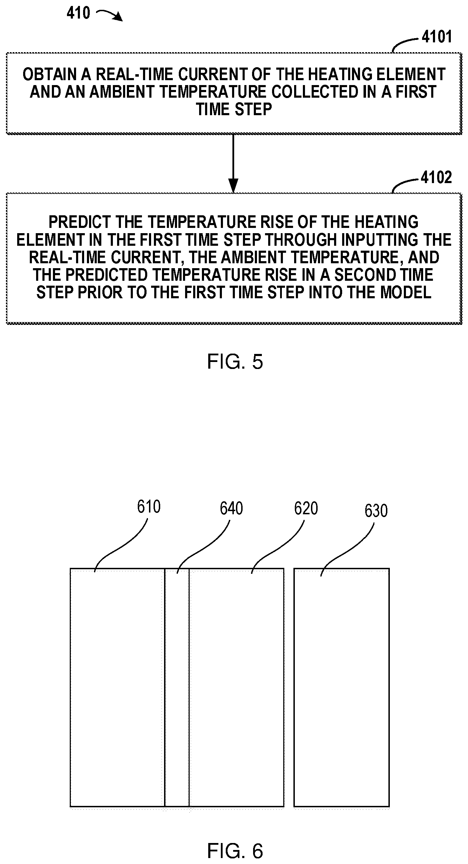

As shown in Fig. 4, the method 400 includes: predicting the temperature rise of the heating element in the switchgear with a model trained by using the method 200. During the prediction of the temperature rise, only a real-time current of the heating element, time intervals, and an ambient temperature need to be obtained, then the temperature rise of the heating element could be iteratively predicted by using the equation (9). Fig. 5 illustrates a flowchart of predicting the temperature rise of the heating element with the model in accordance with an embodiment of the present disclosure. As shown in Fig. 5, predicting the temperature rise of the heating element with the model includes: at 4101, obtaining a real-time current of the heating element and an ambient temperature collected in a first time step; and at 4102, predicting the temperature rise of the heating element in the first time step through inputting the real-time current, the ambient temperature, and the predicted temperature rise in a second time step prior to the first time step into the model. With these embodiments, the temperature rise in the present time step can be predicted reliably by using the current, the ambient temperature, and the predicted temperature rise in the previous time step.

Specifically, at 4102, during the time period from $t_0$ to $t_1$, the temperature rise $\tau_1$ can be calculated by using the equation (9) based on the real-time current $I_0$, the temperature rise $\tau_0$ and the ambient temperature $T_{amb0}$; during the time period from $t_1$ to $t_2$, the temperature rise $\tau_2$ can be calculated by using the equation (9) based on the real-time current $I_1$, the temperature rise $\tau_1$ and the ambient temperature $T_{amb1}$; and during the time period from $t_{n-1}$ to $t_n$, the temperature rise $\tau_n$ can be calculated by using the equation (9) based on the real-time current $I_{n-1}$, the temperature rise $\tau_{n-1}$ and the ambient temperature $T_{ambn-1}$. The temperature rises $\tau_1$, $\tau_2$, and $\tau_n$ can be represented by equations (10), (11), and (12) respectively:

$$\tau_1 = d * \frac{I_0{}^2*[1+0.00381*(\tau_0+T_{amb0})]}{\tau_0{}^\gamma}\left(1 - e^{-\frac{\Delta t}{a*\frac{1}{\tau_0{}^\gamma}+b}}\right) + \tau_0 e^{-\frac{\Delta t}{a*\frac{1}{\tau_0{}^\gamma}+b}} \qquad (10),$$

$$\tau_2 = d * \frac{I_1{}^2*[1+0.00381*(\tau_1+T_{amb1})]}{\tau_1{}^\gamma}\left(1 - e^{-\frac{\Delta t}{a*\frac{1}{\tau_1{}^\gamma}+b}}\right) + \tau_1 e^{-\frac{\Delta t}{a*\frac{1}{\tau_1{}^\gamma}+b}} \qquad (11),$$

$$\ldots\ldots$$

$$\tau_n = d * \frac{I_{n-1}{}^2*[1+0.00381*(\tau_{n-1}+T_{ambn-1})]}{\tau_{n-1}{}^\gamma}\left(1 - e^{-\frac{\Delta t}{a*\frac{1}{\tau_{n-1}{}^\gamma}+b}}\right) + \tau_{n-1} e^{-\frac{\Delta t}{a*\frac{1}{\tau_{n-1}{}^\gamma}+b}} \qquad (12),$$

The model trained by the method 200 can be used not only to predict the transient temperature rise of the heating element at any time point, but also to predict the steady state temperature rise of the heating element at any current. According to the equation (1), when the temperature rise of the heating element becomes stable at any current, $d\tau$ will equal to 0. Thus, the steady state temperature rise $\tau_w$ at any current $I$ may be represented by an equation (13):

$$\tau_w = d * \frac{I^2*[1+0.00381*(\tau_w+T_{amb})]}{\tau_w{}^\gamma} \qquad (13)$$

According to embodiments of the approach I, time constant as a function of temperature rise and dynamic current loads are both taken into consideration when building the model. The model trained by the method 200 may be used to predict transient or steady state temperature rise under any current load. The model is designed with strong physical constraints and few parameters which could prevent over fitting on most switchgear workloads. With these embodiments, the outage time of the switchgear can be reduced and the reliability of the switchgear can be improved.

Referring back to Fig. 4, in some embodiments, the method 400 further includes: at 420, obtaining a real-time temperature of the heating element collected in the first time step; at 430, converting the real-time temperature of the heating element into a real-time temperature rise based on the ambient temperature; and at 440, triggering an alarm in response to a difference between the real-time temperature rise and the predicted temperature rise exceeding a predetermined threshold. During the operation of the switchgear 100, the real-time temperature rise detected by sensors can be compared with the predicted temperature rise, so as to monitor whether the actual temperature rise of the heating element deviates away from the predicted temperature rise. With these embodiments, the anomaly temperature rise in the switchgear 100 can be detected timely and thus corresponding maintenance may be performed on the switchgear.

Fig. 6 illustrates an example test arrangement of the switchgear 100 in accordance with an embodiment of the present disclosure. As shown in Fig. 6, a first feeder panel 610, a second feeder panel 620, and a third feeder panel 630 are arranged from left to right. The feeder panel 610 and the second feeder panel 620 are connected by double D bars 640, and the third feeder panel 630 is left alone without any connection. The current comes into the switchgear 100 from the second feeder panel 620 and out of the switchgear 100 from the first feeder panel 610. Thermocouples (not shown) are arranged on the contact points of the switchgear 100, such as the busbar contact 101, the circuit breaker upper contact finger 102, the circuit breaker lower contact finger 103, and the cable contact 104 as shown in Fig. 1, to collect the real-time temperature of the contact points.

Testing currents are listed in the following Table 1. In some embodiments, the currents of Flag 3 to Flag 16 except Flags 6, 7, 11, and 12 as shown in the Table 1 are selected as a training set, and the currents of Flag 17 to Flag 22 are selected as a validation set. There are 43% of the data in the training set and 57% in the validation set.

Table 1

| Current (A) | Duration (min) | Flag |
|---|---|---|
| 650 | 30 | 1 |
| 555 | 45 | 2 |
| 460 | 90 | 3 |
| 355 | 290 | 4 |
| 510 | 45 | 5 |
| 0 | 915 | 6 |
| 510 | 240 | 7 |
| 610 | 75 | 8 |
| 705 | 75 | 9 |
| 810 | 60 | 10 |
| 0 | 1050 | 11 |
| 810 | 175 | 12 |
| 710 | 30 | 13 |
| 560 | 60 | 14 |
| 760 | 135 | 15 |
| 810 | 90 | 16 |
| 810 | 360 | 17 |
| 710 | 540 | 18 |
| 905 | 45 | 19 |
| 1050 | 255 | 20 |
| 910 | 30 | 21 |
| 805 | 30 | 22 |

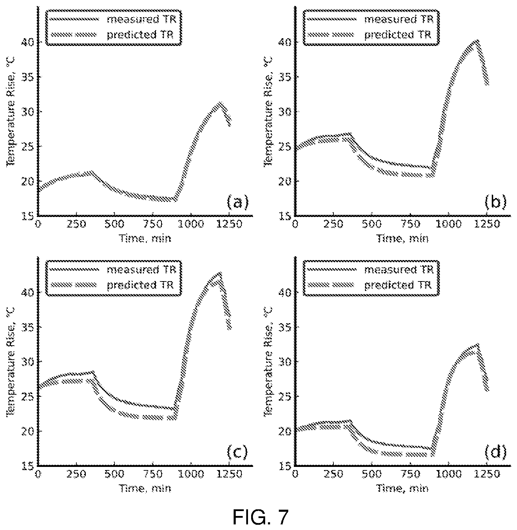

Based on the detected currents, the time intervals, and the ambient temperature, the prediction results of the temperature rise are as shown in Figs. 7-8.

Fig. 7(a) illustrates the prediction result of the temperature rise of the busbar contact of phase A on the first feeder panel 610. The solid line of Fig. 7(a) indicates the measured temperature rise of the busbar contact of phase A. The dashed line of Fig. 7(a) indicates the predicted temperature rise of the busbar contact of phase A.

Fig. 7(b) illustrates the prediction result of the temperature rise of the circuit breaker upper contact finger of phase A on the first feeder panel 610. The solid line of Fig. 7(b) indicates the measured temperature rise of the circuit breaker upper contact finger of phase A. The dashed line of Fig. 7(b) indicates the predicted temperature rise of the circuit breaker upper contact finger of phase A.

Fig. 7(c) illustrates the prediction result of the temperature rise of the circuit breaker lower contact finger of phase A on the first feeder panel 610. The solid line of Fig. 7(c) indicates the measured temperature rise of the circuit breaker lower contact finger of phase A. The dashed line of Fig. 7(c) indicates the predicted temperature rise of the circuit breaker lower contact finger of phase A.

Fig. 7(d) illustrates the prediction result of the temperature rise of the cable contact of phase A on the first feeder panel 610. The solid line of Fig. 7(d) indicates the measured temperature rise of the cable contact of phase A. The dashed line of Fig. 7(d) indicates the predicted temperature rise of the cable contact of phase A.

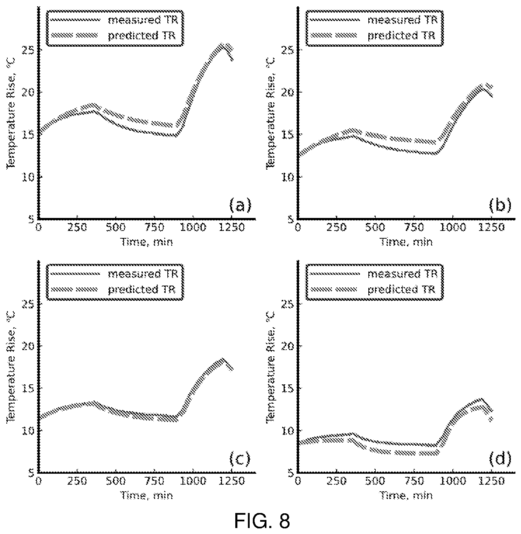

Fig. 8(a) illustrates the prediction result of the temperature rise of the busbar contact of phase A on the first feeder panel 620. The solid line of Fig. 8(a) indicates the measured temperature rise of the busbar contact of phase A. The dashed line of Fig. 8(a) indicates the predicted temperature rise of the busbar contact of phase A.

Fig. 8(b) illustrates the prediction result of the temperature rise of the circuit breaker upper contact finger of phase A on the first feeder panel 620. The solid line of Fig. 8(b) indicates the measured temperature rise of the circuit breaker upper contact finger of phase A. The dashed line of Fig. 8(b) indicates the predicted temperature rise of the circuit breaker upper contact finger of phase A.

Fig. 8(c) illustrates the prediction result of the temperature rise of the circuit breaker lower contact finger of phase A on the first feeder panel 620. The solid line of Fig. 8(c) indicates the measured temperature rise of the circuit breaker lower contact finger of phase A. The dashed line of Fig. 8(c) indicates the predicted temperature rise of the circuit breaker lower contact finger of phase A.

Fig. 8(d) illustrates the prediction result of the temperature rise of the cable contact of phase A on the first feeder panel 620. The solid line of Fig. 8(d) indicates the measured temperature rise of the cable contact of phase A. The dashed line of Fig. 8(d) indicates the predicted temperature rise of the cable contact of phase A.

Table 2 illustrates prediction errors of the temperature rise of the busbar contact, the circuit breaker upper contact finger, the circuit breaker lower contact finger, and the cable contact of phases A, B, and C on the panels 610 and 620. As can be seen from table 2, the absolute prediction error is less than 2.90°C in all cases. The overall mean prediction errors are 0.94°C and 0.52°C for the panel 610 and the panel 620 respectively. These errors are acceptable in practical applications.

**Table 2**

| | Panel 610 | | Panel 620 | |
|---|---|---|---|---|
| | max. abs. error (°C) | mean abs. error (°C) | max. abs. error (°C) | mean abs. error (°C) |
| busbar contact A | 0.69 | 0.18 | 1.30 | 0.74 |
| busbar contact B | 1.11 | 0.63 | 0.64 | 0.30 |
| busbar contact C | 1.11 | 0.64 | 0.40 | 0.14 |
| circuit breaker upper contact finger A | 1.69 | 0.90 | 1.40 | 0.80 |
| circuit breaker upper contact finger B | 2.04 | 0.97 | 0.74 | 0.37 |
| circuit breaker upper contact finger C | 2.35 | 1.42 | 0.70 | 0.38 |
| circuit breaker lower contact finger A | 1.96 | 1.20 | 0.54 | 0.29 |
| circuit breaker lower contact finger B | 2.11 | 1.20 | 0.51 | 0.16 |
| circuit breaker lower contact finger C | 2.89 | 1.46 | 1.25 | 0.77 |
| cable contact A | 1.64 | 0.89 | 1.18 | 0.79 |
| cable contact B | 1.47 | 0.81 | 1.04 | 0.72 |
| cable contact C | 1.68 | 0.89 | 1.07 | 0.75 |

**Approach II**

Approach II provides a different manner to solve the equation (1). Specifically, through plugging the equation (2) into the equation (1), an equation (14) is obtained:

$$pdt = \lambda A \tau^{1+\gamma} dt + cmd\tau \qquad (14).$$

Then, through plugging the equation (6) into the equation (14), an equation (15) is obtained:

$$\frac{d\tau}{dt} = \frac{\eta * I^2 * [1+0.00381*(\tau+T_{amb})]*\rho_0}{cm} - \frac{\lambda A \tau^{1+\gamma}}{cm} \qquad (15).$$

The equation (15) may be rewritten as an equation (16) through letting $f = \frac{\eta * \rho_0}{cm}$ and $g = \frac{\lambda A}{cm}$:

$$\frac{d\tau}{dt} = f * I^2 * [1 + 0.00381 * (\tau + T_{amb})] - g * \tau^{1+\gamma} \qquad (16),$$

$g$, $f$, and $\gamma$ are undetermined parameters.

The model represented by the equation (16) may be trained by the method 200 as shown in Figs. 2 and 3 to determine the parameters $g$, $f$, and $\gamma$. The training process of the model represented by the equation (16) is similar to that of the model represented by the equation (9), except that each of the n equations is created by using Runge-Kutta iterative method. Thus, the specific training process of the model represented by the equation (16) would not be described in detail herein anymore.

After the undetermined parameters $g$, $f$, and $\gamma$ have been determined, the trained model represented by the equation (16) can be used to determine the temperature rise of the heating element step by step, for example by using the method 400 as shown in Figs. 4 and 5. The specific predicting process of the transient temperature rise of the heating element can be calculated using the Runge-Kutta iterative method.

Moreover, the model represented by the equation (16) can be used not only to predict the transient temperature rise of the heating element at any time point, but also to predict the steady state temperature rise of the heating element at any current. According to the equation (16), when the temperature rise of the heating element becomes stable at any current, $\frac{d\tau}{dt}$ will equal to 0. Thus, the steady state temperature rise $\tau_w$ at any current $I$ may be represented by an equation (17):

$$\tau_w^{1+\gamma} = \frac{f}{g} * I^2 * [1 + 0.00381 * (\tau_w + T_{amb})] \qquad (17).$$

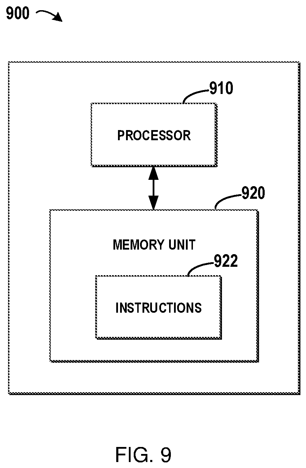

In some embodiments of the present disclosure, as shown in Fig. 9, an apparatus 900 for training the model for predicting the temperature rise and/or determining the temperature rise in accordance with embodiments of the present disclosure is provided. The apparatus 900 may comprise a computer processor 910 coupled to a computer-readable memory unit 920, and the memory unit 920 comprises instructions 922. When executed by the computer processor 910, the instructions 922 may cause the computer processor 910 to implement the methods 200 and 400 as described in the preceding paragraphs, and details will be omitted hereinafter.

According to embodiments of the present disclosure, the methods 200 and 400 are not limited to be implemented by a local processor, but may be implemented by a remote processor. For example, the methods 200 and 400 may be implemented at a cloud computing node. Specifically, the data collected at site can be transferred to the cloud computing node and processed at the cloud computing node. Then, the calculation results can be returned to local devices or systems from the cloud computing node. In this way, there is no need to provide additional calculation devices at site.

In some embodiments, each of the methods 200 and 400 may be implemented by one processor, for example a MCU or a cloud computing node. In other embodiments, each of the methods 200 and 400 may be implemented by several processors. For example, some acts of the methods 200 and 400 may be implemented by the MCU locally, and other acts of the methods 200 and 400 may be implemented the cloud computing node remotely. The scope of the present disclosure is not intended to be limited in this respect.

In some embodiments of the present disclosure, a computer readable medium is provided. The computer readable medium has instructions stored thereon, and the instructions, when executed on at least one processor, may cause at least one processor to perform the methods 200 and 400 as described in the preceding paragraphs, and details will be omitted hereinafter.

In some embodiments of the present disclosure, a computer program product is provided. The computer program product comprises instructions which, when executed on at least one processor, may cause at least one processor to perform the methods 200 and 400 as described in the preceding paragraphs, and details will be omitted hereinafter.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While some aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. On the other hand, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (200) for training a model for predicting a temperature rise of a heating element in a switchgear (100), comprising:

   obtaining (210) a model for predicting the temperature rise, the model comprising a plurality of inputs, an output, and several parameters to be determined;
   obtaining (220) n+1 sets of physical quantities in relation to the heating element, each set of physical quantities being collected at a corresponding one of n+1 time points spaced apart from each other by a time step in a normal operation state of the heating element, each set of physical quantities comprising a current and an actual temperature of the heating element and an ambient temperature;
   converting (230) the actual temperature in each set of physical quantities into an actual temperature rise based on the corresponding ambient temperature; and
   training (240) the model with the current, the actual temperature rise and the ambient temperature to determine the several parameters.

2. The method according to claim 1, wherein training the model with the current, the actual temperature rise and the ambient temperature comprises:

   for each time step, creating (2401) an equation by using the current, the actual temperature rise and the ambient temperature corresponding to a starting time point of the time step as the inputs of the model and using the actual temperature rise corresponding to an ending time point of the time step as the output of the model, to obtain n equations; and
   solving (2402) the n equations to determine the several parameters.

**3.** The method according to claim 2,

> wherein each of the n equations is created by using a discrete approximate scheme or Runge-Kutta iterative method, and/or
> wherein the n equations are solved by a least square method.

**4.** The method according to any of claims 1-3, wherein the heating element comprises at least one of a busbar contact (101), a circuit breaker upper contact finger (102), a circuit breaker lower contact finger (103), and a cable contact (104).

**5.** A method for determining a temperature rise of a heating element in a switchgear, comprising:
predicting (410) the temperature rise of the heating element in the switchgear with a model trained by using the method according to any of claims 1-4.

**6.** The method according to claim 5, wherein predicting the temperature rise of the heating element with the model comprises:

> obtaining (4101) a real-time current of the heating element and an ambient temperature collected in a first time step; and
> predicting (4102) the temperature rise of the heating element in the first time step through inputting the real-time current, the ambient temperature, and the predicted temperature rise in a second time step prior to the first time step into the model.

**7.** The method according to claim 6, further comprising:

> obtaining (420) a real-time temperature of the heating element collected in the first time step;
> converting (430) the real-time temperature of the heating element into a real-time temperature rise based on the ambient temperature; and
> triggering (440) an alarm in response to a difference between the real-time temperature rise and the predicted temperature rise exceeding a predetermined threshold.

**8.** An apparatus (900) for training a model for predicting a temperature rise of a heating element in a switchgear, comprising:

> at least one processor (910); and
> at least one memory (920) comprising instructions (922) stored thereon which, when executed by the at least one processor, cause the at least one processor to perform acts comprising:
>
> > obtaining a model for predicting the temperature rise, the model comprising a plurality of inputs, an output, and several parameters to be determined;
> > obtaining n+1 sets of physical quantities in relation to the heating element, each set of physical quantities being collected at a corresponding one of n+1 time points spaced apart from each other by a time step in a normal operation state of the heating element, each set of physical quantities comprising a current and an actual temperature of the heating element and an ambient temperature;
> > converting the actual temperature in each set of physical quantities into an actual temperature rise based on the corresponding ambient temperature; and
> > training the model with the current, the actual temperature rise and the ambient temperature to determine the several parameters.

**9.** The apparatus according to claim 8, wherein training the model with the current, the actual temperature rise and the ambient temperature comprises:

> for each time step, creating an equation by using the current, the actual temperature rise and the ambient temperature corresponding to a starting time point of the time step as the inputs of the model and using the actual temperature rise corresponding to an ending time point of the time step as the output of the model, to obtain n equations; and
> solving the n equations to determine the several parameters.

10. The apparatus according to claim 9,

   wherein each of the n equations is created by using a discrete approximate scheme or Runge-Kutta iterative method, and/or
   wherein the n equations are solved by a least square method.

11. An apparatus for determining a temperature rise of a heating element in a switchgear, comprising:

   at least one processor; and
   at least one memory comprising instructions stored thereon which, when executed by the at least one processor, cause the at least one processor to perform acts comprising:
   predicting the temperature rise of the heating element in the switchgear with a model trained by using the apparatus according to any of claims 8-10.

12. The apparatus according to claim 11, wherein predicting the temperature rise of the heating element with the model comprises:

   obtaining a real-time current of the heating element and an ambient temperature collected in a first time step; and
   predicting the temperature rise of the heating element in the first time step through inputting the real-time current, the ambient temperature, and the predicted temperature rise in a second time step prior to the first time step into the model.

13. The apparatus according to claim 12, wherein the acts further comprises:

   obtaining a real-time temperature of the heating element collected in the first time step;
   converting the real-time temperature of the heating element into a real-time temperature rise based on the ambient temperature; and
   triggering an alarm in response to a difference between the real-time temperature rise and the predicted temperature rise exceeding a predetermined threshold.

14. The apparatus according to any of claims 8-13, wherein the at least one processor comprises at least one of a local processor or a remote processor, and
   wherein the remote processor comprises a cloud computing node.

15. A computer readable storage medium having instructions stored thereon, the instructions, when executed by at least one processor, cause the at least one processor to perform the method according to any of claims 1 to 7.

**Patentansprüche**

1. Verfahren (200) zum Trainieren eines Modells zum Vorhersagen eines Temperaturanstiegs eines Heizelements in einer Schaltanlage (100), umfassend:

   Erhalten (210) eines Modells zum Vorhersagen des Temperaturanstiegs, wobei das Modell eine Vielzahl von Eingaben, eine Ausgabe und mehrere zu bestimmende Parameter umfasst;
   Erhalten (220) von n+1 Sätzen physikalischer Größen in Bezug auf das Heizelement, wobei jeder Satz physikalischer Größen zu einem entsprechenden von n+1 Zeitpunkten gesammelt wird, die in einem normalen Betriebszustand des Heizelements durch einen Zeitschritt voneinander beabstandet sind, wobei jeder Satz physikalischer Größen eine Stromstärke und eine tatsächliche Temperatur des Heizelements und eine Umgebungstemperatur umfasst;
   Umwandeln (230) der tatsächlichen Temperatur in jedem Satz physikalischer Größen in einen tatsächlichen Temperaturanstieg auf der Grundlage der entsprechenden Umgebungstemperatur; und
   Trainieren (240) des Modells mit dem Strom, dem tatsächlichen Temperaturanstieg und der Umgebungstemperatur, um die verschiedenen Parameter zu bestimmen.

2. Verfahren nach Anspruch 1, wobei das Trainieren des Modells mit dem Strom, dem tatsächlichen Temperaturanstieg und der Umgebungstemperatur umfasst:

für jeden Zeitschritt, Erstellen (2401) einer Gleichung durch Verwenden des Stroms, des tatsächlichen Temperaturanstiegs und der Umgebungstemperatur entsprechend einem Startzeitpunkt des Zeitschritts als die Eingaben des Modells und Verwenden des tatsächlichen Temperaturanstiegs entsprechend einem Endzeitpunkt des Zeitschritts als die Ausgabe des Modells, um n Gleichungen zu erhalten; und
Lösen (2402) der n Gleichungen, um die verschiedenen Parameter zu bestimmen.

3. Verfahren nach Anspruch 2,

wobei jede der n Gleichungen durch Verwenden eines diskreten Näherungsschemas oder eines iterativen Runge-Kutta-Verfahrens erstellt wird, und/oder
wobei die n Gleichungen durch ein Verfahren der kleinsten Quadrate gelöst werden.

4. Verfahren nach einem der Ansprüche 1 bis 3, wobei das Heizelement mindestens eines von einem Sammelschienenkontakt (101), einem oberen Kontaktfinger (102) eines Leistungsschalters, einem unteren Kontaktfinger (103) eines Leistungsschalters und einem Kabelkontakt (104) umfasst.

5. Verfahren zum Bestimmen eines Temperaturanstiegs eines Heizelements in einer Schaltanlage, umfassend:
Vorhersage (410) des Temperaturanstiegs des Heizelements in der Schaltanlage mit einem Modell, das unter Verwenden des Verfahrens gemäß einem der Ansprüche 1 bis 4 trainiert wurde.

6. Verfahren gemäß Anspruch 5, wobei die Vorhersage des Temperaturanstiegs des Heizelements mit dem Modell umfasst:

Erhalten (4101) eines Echtzeitstroms des Heizelements und einer Umgebungstemperatur, die in einem ersten Zeitschritt erfasst wurden; und
Vorhersage (4102) des Temperaturanstiegs des Heizelements in dem ersten Zeitschritt durch Eingeben des Echtzeitstroms, der Umgebungstemperatur und des vorhergesagten Temperaturanstiegs in einem zweiten Zeitschritt vor dem ersten Zeitschritt in das Modell.

7. Verfahren nach Anspruch 6, ferner umfassend:

Erhalten (420) einer Echtzeittemperatur des Heizelements, die in dem ersten Zeitschritt gesammelt wurde;
Umwandeln (430) der Echtzeittemperatur des Heizelements in einen Echtzeittemperaturanstieg auf der Grundlage der Umgebungstemperatur; und
Auslösen (440) eines Alarms als Reaktion auf eine Differenz zwischen dem Echtzeittemperaturanstieg und dem vorhergesagten Temperaturanstieg, die einen vorbestimmten Schwellenwert überschreitet.

8. Vorrichtung (900) zum Trainieren eines Modells zum Vorhersagen eines Temperaturanstiegs eines Heizelements in einer Schaltanlage, umfassend:

mindestens einen Prozessor (910); und
mindestens einen Speicher (920), der darauf gespeicherte Anweisungen (922) umfasst, die, wenn sie von dem mindestens einen Prozessor ausgeführt werden, den mindestens einen Prozessor dazu veranlassen, Aktionen auszuführen, die umfassen:

Erhalten eines Modells zum Vorhersagen des Temperaturanstiegs, wobei das Modell eine Vielzahl von Eingaben, eine Ausgabe und mehrere zu bestimmende Parameter umfasst;
Erhalten von n+1 Sätzen physikalischer Größen in Bezug auf das Heizelement, wobei jeder Satz physikalischer Größen zu einem entsprechenden von n+1 Zeitpunkten gesammelt wird, die in einem normalen Betriebszustand des Heizelements durch einen Zeitschritt voneinander beabstandet sind, wobei jeder Satz physikalischer Größen eine aktuelle und eine tatsächliche Temperatur des Heizelements und eine Umgebungstemperatur umfasst;
Umwandeln der tatsächlichen Temperatur in jedem Satz physikalischer Größen in einen tatsächlichen Temperaturanstieg auf der Grundlage der entsprechenden Umgebungstemperatur; und
das Modell mit dem Strom, dem tatsächlichen Temperaturanstieg und der Umgebungstemperatur trainiert wird, um die verschiedenen Parameter zu bestimmen.

9. Vorrichtung nach Anspruch 8, wobei das Trainieren des Modells mit dem Strom, dem tatsächlichen Temperaturanstieg und der Umgebungstemperatur umfasst:

für jeden Zeitschritt eine Gleichung erstellt wird, indem der Strom, der tatsächliche Temperaturanstieg und die Umgebungstemperatur, die mit einem Startzeitpunkt des Zeitschritts korrespondieren, als Eingaben des Modells verwendet werden und der tatsächliche Temperaturanstieg, der mit einem Endzeitpunkt des Zeitschritts korrespondiert, als Ausgabe des Modells verwendet wird, um n Gleichungen zu erhalten; und
die n Gleichungen gelöst werden, um die verschiedenen Parameter zu bestimmen.

10. Vorrichtung gemäß Anspruch 9,

wobei jede der n Gleichungen durch Verwenden eines diskreten Näherungsschemas oder eines iterativen Runge-Kutta-Verfahrens erstellt wird, und/oder
wobei die n Gleichungen durch eine Methode der kleinsten Quadrate gelöst werden.

11. Vorrichtung zum Bestimmen eines Temperaturanstiegs eines Heizelements in einer Schaltanlage, umfassend:

mindestens einen Prozessor; und
mindestens einen Speicher mit darauf gespeicherten Anweisungen, die, wenn sie von dem mindestens einen Prozessor ausgeführt werden, den mindestens einen Prozessor veranlassen, Aktionen auszuführen, die umfassen:
Vorhersage des Temperaturanstiegs des Heizelements in der Schaltanlage mit einem Modell, das unter Verwenden der Vorrichtung gemäß einem der Ansprüche 8 bis 10 trainiert wurde.

12. Vorrichtung gemäß Anspruch 11, wobei die Vorhersage des Temperaturanstiegs des Heizelements mit dem Modell umfasst:

Erhalten eines Echtzeitstroms des Heizelements und einer Umgebungstemperatur, die in einem ersten Zeitschritt gesammelt werden; und
Vorhersagen des Temperaturanstiegs des Heizelements im ersten Zeitschritt durch Eingeben des Echtzeitstroms, der Umgebungstemperatur und des vorhergesagten Temperaturanstiegs in einem zweiten Zeitschritt vor dem ersten Zeitschritt in das Modell.

13. Vorrichtung gemäß Anspruch 12, wobei die Aktionen ferner umfassen:

Erhalten einer Echtzeittemperatur des Heizelements, die im ersten Zeitschritt gesammelt wird;
Umwandeln der Echtzeittemperatur des Heizelements in einen Echtzeittemperaturanstieg basierend auf der Umgebungstemperatur; und
Auslösen eines Alarms als Reaktion auf eine Differenz zwischen dem Echtzeittemperaturanstieg und dem vorhergesagten Temperaturanstieg, die einen vorbestimmten Schwellenwert überschreitet.

14. Vorrichtung gemäß einem der Ansprüche 8 bis 13, wobei der mindestens eine Prozessor mindestens einen lokalen Prozessor oder einen remote Prozessor umfasst, und
wobei der remote Prozessor einen Cloud-Computing-Knoten umfasst.

15. Computerlesbares Speichermedium mit darauf gespeicherten Anweisungen, wobei die Anweisungen, wenn sie von mindestens einem Prozessor ausgeführt werden, den mindestens einen Prozessor veranlassen, das Verfahren gemäß einem der Ansprüche 1 bis 7 auszuführen.

## Revendications

1. Procédé (200) pour former un modèle de prédiction d'une élévation de température d'un élément chauffant dans un appareillage de commutation (100), le procédé comprenant les étapes suivantes :

obtenir (210) un modèle de prédiction de l'élévation de température, le modèle comprenant une pluralité d'entrées, une sortie, et plusieurs paramètres à déterminer ;
obtenir (220) n+1 ensembles de quantités physiques en relation avec l'élément chauffant, chaque ensemble de quantités physiques étant collecté à un point de temps correspondant des n+1 points de temps espacés les uns des autres d'un certain pas de temps dans un état de fonctionnement normal de l'élément chauffant, chaque ensemble de quantités physiques comprenant un courant et une température réelle de l'élément chauffant et une température ambiante ;

convertir (230) la température réelle dans chaque ensemble de quantités physiques en une élévation de température réelle basée sur la température ambiante correspondante ; et

former (240) le modèle avec le courant, l'élévation de température réelle et la température ambiante pour déterminer les différents paramètres.

**2.** Procédé selon la revendication 1, dans lequel la formation du modèle avec le courant, l'élévation de température réelle et la température ambiante comprend les étapes suivantes :

pour chaque pas de temps, créer (2401) une équation en utilisant le courant, l'élévation de température réelle et la température ambiante correspondant à un point de temps de début du pas de temps comme entrées du modèle et en utilisant l'élévation de température réelle correspondant à un point de temps de fin du pas de temps comme sortie du modèle, pour obtenir n équations ; et

résoudre (2402) les n équations pour déterminer les différents paramètres.

**3.** Procédé selon la revendication 2,

dans lequel chacune des n équations est créée en utilisant un schéma approximatif discret ou une méthode itérative de Runge-Kutta, et/ou

dans lequel les n équations sont résolues par un procédé des moindres carrés.

**4.** Procédé selon l'une quelconque des revendications 1 à 3, dans lequel l'élément chauffant comprend au moins l'un d'un contact de barre omnibus (101), d'un doigt de contact supérieur de disjoncteur (102), d'un doigt de contact inférieur de disjoncteur (103) et d'un contact de câble (104).

**5.** Procédé pour déterminer une élévation de température d'un élément chauffant dans un appareillage de commutation, le procédé comprenant l'étape suivante :

prédire (410) l'élévation de température de l'élément chauffant dans l'appareillage de commutation avec un modèle formé en utilisant le procédé selon l'une quelconque des revendications 1 à 4.

**6.** Procédé selon la revendication 5, dans lequel la prédiction de l'élévation de température de l'élément chauffant avec le modèle comprend les étapes suivantes :

obtenir (4101) un courant en temps réel de l'élément chauffant et une température ambiante collectés lors d'un premier pas de temps ; et

prédire (4102) l'élévation de température de l'élément chauffant lors du premier pas de temps en entrant dans le modèle le courant en temps réel, la température ambiante et l'élévation de température prédite dans un deuxième pas de temps antérieur au premier pas de temps.

**7.** Procédé selon la revendication 6, comprenant en outre les étapes suivantes :

obtenir (420) une température en temps réel de l'élément chauffant collectée dans lors du premier pas de temps ;

convertir (430) la température en temps réel de l'élément chauffant en une élévation de température en temps réel basée sur la température ambiante ; et

déclencher (440) une alarme en réponse à une différence entre l'élévation de température en temps réel et l'élévation de température prédite dépassant un seuil prédéterminé.

**8.** Appareil (900) pour former un modèle de prédiction d'une élévation de température d'un élément chauffant dans un appareillage de commutation, comprenant :

au moins un processeur (910) ; et

au moins une mémoire (920) comprenant des instructions (922) qui y sont stockées et qui, lorsqu'elles sont exécutées par l'au moins un processeur, amènent l'au moins un processeur à exécuter des actions comprenant les étapes suivantes :

obtenir un modèle de prédiction de l'élévation de température, le modèle comprenant une pluralité d'entrées, une sortie, et plusieurs paramètres à déterminer ;

obtenir n+1 ensembles de quantités physiques en relation avec l'élément chauffant, chaque ensemble de quantités physiques étant collecté à un point de temps correspondant des n+1 points de temps espacés les uns des autres d'un certain pas de temps dans un état de fonctionnement normal de l'élément chauffant, chaque ensemble de quantités physiques comprenant un courant et

une température réelle de l'élément chauffant et une température ambiante ;

convertir la température réelle dans chaque ensemble de quantités physiques en une élévation de température réelle basée sur la température ambiante correspondante ; et

former le modèle avec le courant, l'élévation de température réelle et la température ambiante pour déterminer les différents paramètres.

9. Appareil selon la revendication 8, dans lequel la formation du modèle avec le courant, l'élévation de température réelle et la température ambiante comprend les étapes suivantes :

pour chaque pas de temps, créer une équation en utilisant le courant, l'élévation de température réelle et la température ambiante correspondant à un point de temps de début du pas de temps comme entrées du modèle et en utilisant l'élévation de température réelle correspondant à un point de temps de fin du pas de temps comme sortie du modèle, pour obtenir n équations ; et

résoudre les n équations pour déterminer les différents paramètres.

10. Appareil selon la revendication 9,

dans lequel chacune des n équations est créée en utilisant un schéma approximatif discret ou une méthode itérative de Runge-Kutta, et/ou

dans lequel les n équations sont résolues par un procédé des moindres carrés.

11. Appareil pour déterminer une élévation de température d'un élément chauffant dans un appareillage de commutation, comprenant :

au moins un processeur ; et

au moins une mémoire comprenant des instructions qui y sont stockées et qui, lorsqu'elles sont exécutées par l'au moins un processeur, amènent l'au moins un processeur à exécuter des actions comprenant les étapes suivantes :

prédire l'élévation de température de l'élément chauffant dans l'appareillage de commutation avec un modèle formé en utilisant l'appareil selon l'une quelconque des revendications 8 à 10.

12. Appareil selon la revendication 11, dans lequel la prédiction de l'élévation de température de l'élément chauffant avec le modèle comprend les étapes suivantes :

obtenir un courant en temps réel de l'élément chauffant et une température ambiante collectés lors d'un premier pas de temps ; et

prédire l'élévation de température de l'élément chauffant lors du premier pas de temps en entrant dans le modèle le courant en temps réel, la température ambiante et l'élévation de température prédite dans un deuxième pas de temps antérieur au premier pas de temps.

13. Appareil selon la revendication 12, dans lequel les actes comprennent en outre les étapes suivantes :

obtenir une température en temps réel de l'élément chauffant collectée dans lors du premier pas de temps ;

convertir la température en temps réel de l'élément chauffant en une élévation de température en temps réel basée sur la température ambiante ; et

déclencher une alarme en réponse à une différence entre l'élévation de température en temps réel et l'élévation de température prédite dépassant un seuil prédéterminé.

14. Appareil selon l'une quelconque des revendications 8 à 13, dans lequel l'au moins un processeur comprend au moins l'un d'un processeur local ou d'un processeur distant, et

dans lequel le processeur distant comprend un nœud d'informatique en nuage.

15. Support de stockage lisible par ordinateur, ayant des instructions stockées sur celui-ci, les instructions, lorsqu'elles sont exécutées par au moins un processeur, amenant l'au moins un processeur à réaliser le procédé selon l'une quelconque des revendications 1 à 7.

FIG. 1

200 ⮧

210

OBTAIN A MODEL FOR PREDICTING THE TEMPERATURE RISE, THE MODEL COMPRISING A PLURALITY OF INPUTS, AN OUTPUT, AND SEVERAL PARAMETERS TO BE DETERMINED

220

OBTAIN n+1 SETS OF PHYSICAL QUANTITIES IN RELATION TO THE HEATING ELEMENT, EACH SET OF PHYSICAL QUANTITIES COMPRISING A CURRENT AND AN ACTUAL TEMPERATURE OF THE HEATING ELEMENT AND AN AMBIENT TEMPERATURE

230

CONVERT THE ACTUAL TEMPERATURE IN EACH SET OF PHYSICAL QUANTITIES INTO AN ACTUAL TEMPERATURE RISE BASED ON THE CORRESPONDING AMBIENT TEMPERATURE

240

TRAIN THE MODEL WITH THE CURRENT, THE ACTUAL TEMPERATURE RISE AND THE AMBIENT TEMPERATURE TO DETERMINE THE SEVERAL PARAMETERS

FIG. 2

240

2401

FOR EACH TIME STEP, CREAT AN EQUATION BY USING THE CURRENT, THE ACTUAL TEMPERATURE RISE AND THE AMBIENT TEMPERATURE CORRESPONDING TO A STARTING TIME POINT OF THE TIME STEP AS THE INPUTS OF THE MODEL AND USING THE ACTUAL TEMPERATURE RISE CORRESPONDING TO AN ENDING TIME POINT OF THE TIME STEP AS THE OUTPUT OF THE MODEL, TO OBTAIN n EQUATIONS

2402

SOLVE THE n EQUATIONS TO DETERMINE THE SEVERAL PARAMETERS

FIG. 3

400 ⟍

┌─────────────────────────────────────────────────┐ ⌐410
│                                                 │
│   PREDICT THE TEMPERATURE RISE OF THE HEATING   │
│     ELEMENT IN THE SWITCHGEAR WITH A MODEL      │
│                                                 │
└─────────────────────────────────────────────────┘
                        │
                        ▼
┌─────────────────────────────────────────────────┐ ⌐420
│                                                 │
│   OBTAIN A REAL-TIME TEMPERATURE OF THE HEATING │
│      ELEMENT COLLECTED IN A FIRST TIME STEP     │
│                                                 │
└─────────────────────────────────────────────────┘
                        │
                        ▼
┌─────────────────────────────────────────────────┐ ⌐430
│                                                 │
│  CONVERT THE REAL-TIME TEMPERATURE OF THE HEATING│
│ ELEMENT INTO A REAL-TIME TEMPERATURE RISE BASED ON│
│           THE AMBIENT TEMPERATURE               │
│                                                 │
└─────────────────────────────────────────────────┘
                        │
                        ▼
┌─────────────────────────────────────────────────┐ ⌐440
│   TRIGGER AN ALARM IN RESPONSE TO A DIFFERENCE  │
│ BETWEEN THE REAL-TIME TEMPERATURE RISE AND THE  │
│    PREDICTED TEMPERATURE RISE EXCEEDING A       │
│          PREDETERMINED THRESHOLD                │
└─────────────────────────────────────────────────┘

FIG. 4

410 ⟶

4101

OBTAIN A REAL-TIME CURRENT OF THE HEATING ELEMENT
AND AN AMBIENT TEMPERATURE COLLECTED IN A FIRST
TIME STEP

4102

PREDICT THE TEMPERATURE RISE OF THE HEATING
ELEMENT IN THE FIRST TIME STEP THROUGH INPUTTING THE
REAL-TIME CURRENT, THE AMBIENT TEMPERATURE, AND
THE PREDICTED TEMPERATURE RISE IN A SECOND TIME
STEP PRIOR TO THE FIRST TIME STEP INTO THE MODEL

FIG. 5

610    640    620    630

FIG. 6

FIG. 7

FIG. 8

900

910

PROCESSOR

920

MEMORY UNIT

922

INSTRUCTIONS

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110991011 A
- CN 110659755 A
- CN 110175386 A
- CN 109284863 A
- US 2020184329 A1